# EUROPEAN PATENT SPECIFICATION

(11) **EP 0 332 434 B1**
(45) Date of publication and mention of the grant of the patent: **01.06.1994**
(21) Application number: 89302327.5
(22) Date of filing: 09.03.1989
(51) Int. Cl.: B60P 3/03

(54) **Use of location-determining systems**
Anwendung für ein Ortungssystem
Application d'un système de localisation

(30) Priority: 09.03.1988 GB 8805630
(43) Date of publication of application: 13.09.1989
(73) Proprietor: SECURITY SERVICES PLC, Sutton Surray SM1 4TX (GB)
(72) Inventor: Crompton, Edward Wyn Lulworth, Harrow Middlesex HA3 6TR (GB)
(74) Representative: Ayers, Martyn Lewis Stanley

(56) References cited:
- EP-A- 0 242 099
- FR-A- 2 485 234
- GB-A- 2 022 548
- US-A- 3 665 386
- US-A- 4 651 157
- PATENT ABSTRACTS OF JAPAN, vol. 10, no. 200 (M-498)(2256), 12 July 1986

## Description

The present invention relates to novel uses of location-determining systems, more particularly to a security system which makes use of the facilities provided by a location-determining system as defined by the features outlined in the preamble of Claim 1 and known from US-A-3 665 386.

Considering, for example, vehicles used by cash-in-transit and similar services, much effort has been expended in the design and operation of the vehicles to ensure their physical security. However, a weakness of existing designs is that access to the interior of the vehicle, or to secure compartments within it, is controlled by one or more members of the crew of the vehicle. This obviously makes the vehicle contents vulnerable in circumstances where the crew are subject to physical violence or intimidation.

It would be desirable therefore if such access could be put beyond the control of the crew as amongst other things it would be pointless for anyone attacking the vehicle to attempt to force or coerce them to cooperate.

Broadly the present invention provides a system which makes use of a location-determining unit automatically to inhibit or to enable an event, or sequence of events, only when the unit is at one or more specified locations. Put another way, the invention makes use of a location-determining system to determine whether a particular action, or unspecified number of actions, is permissible or not.

Thus, the invention provides a security system comprising a location-determining unit and a physical lock device characterised in that, the physical lock device being a physical locking or unlocking device, the system comprises control means responsive to an output of the location-determining unit to control operation of that device in dependence upon the location determined by the location-determining unit.

The system may, for example, be carried or installed in a vehicle used by a company for cash-in-transit purposes. The location-determining unit may be designed for use with radio-borne location signals produced by systems such as the DataTrack, Decca and LORAN-C location-determining systems, with satellite systems and/or with dead reckoning systems. Such systems are currently capable of providing a positional resolution of down to less than fifty meters. The position comparison may be carried out at the location of the location-determining unit or remotely (eg, at a base station with which it communicates, eg, by radio or cellular telephone). The security condition signal can be used for a variety of purposes. In the case of a CIT system, for example, the vehicle can be provided with one or more secure compartments to which access is controlled by an electromechanical lock. Then, the security condition signal can be used to inhibit and enable the operation of the lock depending on whether the location-determining unit reports, for example, that the vehicle is in an allowed location for a cash-drop. The system can be arranged to control access to any number of compartments in that way so that each can only be opened when the vehicle is at the location of the drop-point specified for the contents of that compartment.

The system can be arranged to disable the lock or other mechanism when the location-determining unit enters an area where it cannot operate correctly - as may occur, for example, where the vehicle passes through a tunnel.

Apart from CIT systems, the invention can be used in a wide variety of applications, of which some will be mentioned below.

The invention will be further described by way of non-limitative example with reference to the accompanying drawings, in which:-
Figure 1 is a somewhat schematic view of a CIT vehicle to which the present invention may be applied; and
Figure 2 shows in block form, the principal parts of the circuitry of the security system used in the vehicle of Figure 1.

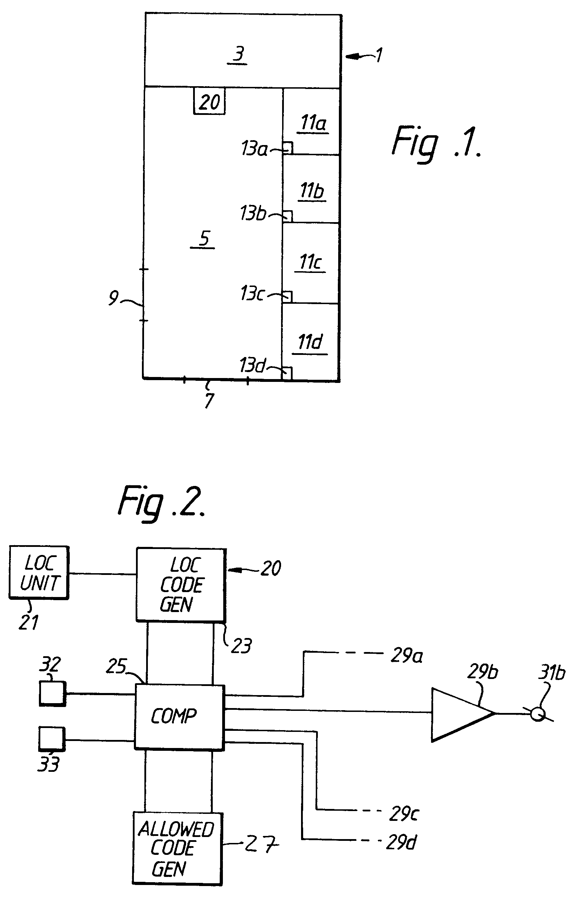

Figure 1 shows a cash-in-transit armoured vehicle 1 having a driver cabin 3 and a secure compartment 5 with a door 7 in which one or more members of the vehicle crew travel. At a cash drop, a crew member in the compartment 5 can pass a cash bag through an access hatch 9 designed to prevent forced access from the exterior of the vehicle.

Within the compartment 5 are provided one or more locked sub-compartments 11a-d which may be used to store respective cash-bags for individual cash drops; four are illustrated but there may be any number. These are locked by electromechanical locks 13a-d which operate under control of a system 20 in accordance with the invention, which only opens any particular one (or permits that one to be opened) when it detects that the vehicle is at the intended drop-point for that sub-compartment's contents.

The system 20 comprises a location-determining unit 21, which may be a commercially available type for use with the DataTrack location-determining system and produces an output signal indicating its current location. This signal is applied to a location code generator 23 which produces a location code made up of a sequence of binary digits (say, 32) in accordance with a secure algorithm which may be periodically changed (eg, every few days or hours). This code is compared by a comparator 25 with one or more codes held in a memory 27 which contains the permissible codes for each of the sub-compartments 11a-d. These codes may be downloaded by radio from a base-station and be updated at the same time the base station changes the location-code generating algorithm; they may be transmitted and stored in coded or unencoded form. If a match is found, then the comparator 25 delivers an enable signal to the appropriate one of driver circuits 29a-d which then energises an associated electromechanical actuator 31a-d, which may be an electric motor, to unlock the sub-compartment 11 in question. The system may further automatically signal to the base station the fact that the lock has been operated. Further, the system may be set up so that the lock is only unlocked for a predetermined period of time (and is then relocked) or to relock it in any event as soon as the detected location of the system alters, so as to hamper any attempt to hijack the vehicle at a valid drop point and drive it elsewhere for unloading.

It will be appreciated that the location code generator 23 and comparator 25 may be implemented by means of a suitably programmed microprocessor.

The unlocking (or locking, if appropriate) procedure may be requested by an operator button 32, which may be located on the unit 20 inside the compartment 5, or elsewhere.

Where the locks are always intended to be opened at the same location, the appropriate location codes can be stored.

Further, the radio-based location-determining system may be supplemented or replaced by an alternative location-determining system such as a dead-reckoning system operative to compute the vehicle's position from its speed and direction; used as an adjunct to a radio-based system, a dead-reckoning system can be used to keep the system functional when it is of range of the radio-based system or reception is inadequate. Obviously, even without an additional dead reckoning system, the system can be designed to be fail-safe simply by inhibiting operation of the unlocking mechanism when the radio-based location-determining unit is inoperative; adding a dead reckoning system enables it to unlock the required lock at the appropriate location even when the radio-based unit is inoperative.

Other applications of the present invention include:-
A valve or lock for controlling the discharge of material carried by a ship, barge or other floating vessel can be controlled by a system according to the invention, implemented as described above. This could be used for only allowing the discharge of the vessel's load (or fuel).

The movement of goods in sealed containers can be remotely controlled from the point of origin, or a central control office. By use of the present system, the sealing mechanisms of such containers could be arranged to remain automatically sealed at all locations except the correct, prerecorded destination. On arrival a radio signal can be initiated by the system to advise the central control office of its arrival, so that suitable arrangements could be made for the handing over of its contents into the recipient's custody.

The system of the present invention can be applied to prevent the movement of a container of any kind (for people or goods) outside pre-ordained limits. The driver of an armoured vehicle carrying a protected load from location A to location B could be instructed to follow a specific route. Any deviation from that route could be arranged to cause an immediate alarm. Further, the system can be arranged to provide a facility whereby the unlocking (or locking procedure) can be overridden, for example by operation of a button 33 in the driver cabin, by the driver of a vehicle, if, say, the vehicle is under attack or if another operative outside the vehicle is being forced to cooperate with an attempt to steal from the vehicle. The system may require that a machine readable identity card be placed in a slot on the outside of the secure compartment and be verified before the unlocking procedure takes place; this can be arranged to be in view of the driver or another occupant of the driver cabin 3 and subject to the override just mentioned in case an attempt to use the card is made under duress or by a person not authorised. The use of such a card is not of course limited to CIT and similar vehicles but may equally well be adopted in the various other embodiments of the invention.

## Claims

1. A security system comprising a location-determining unit (21) and a physical lock device (13a-13d) characterised in that, the physical lock device being a physical locking or unlocking device, the system comprises control means (20) responsive to an output of the location-determining unit (21), to control operation of that lock device (13a-13d) in dependence upon the location determined by the location-determining unit (21).

2. A system according to claim 1, in which the means comprise a location-code generator (23) for producing a code corresponding to the location determined by the location-determining unit, a memory (27) for storing one or more permissible location codes and a comparator (25) for comparing the location code with the permissible code or codes to control operation of the device.

3. A system according to claim 2, in which the location-code generator (23) is operative to produce the location code in accordance with a secure algorithm.

4. A system according to claim 2 or 3 and including means for overriding the detection of a location code corresponding to a permissible code to inhibit operation of the device.

5. A system according to any one of claims 1 to 4 and including means for signalling that the device has been operated.

6. A system according to any one of claims 1 to 5 in which there are a number of such devices controlled by the control means (20), each having respective permissible location codes for enabling operation of that device.

7. A system according to any one of claims 1 to 6 in which the, or each, device is a lock controlling access to a secure compartment.

8. A system according to any one of claims 1 to 7 in which means are provided to unlock the device for a predetermined period of time following detection of a permissible location and/to relock the device when the detected location changes.

9. A system according to any one of the preceding claims in wich the control means is operative to compare the location code with one or more permissible, neutral or prohibited locations or ranges of locations and means for signalling a security condition in accordance with the result of that comparison.

10. A system according to claim 9, wherein the signalling means is operative to signal deviation of the detected location from a defined route or to control operation of a physical locking or unlocking device if a permissible location is detected.

11. A vehicle comprising a system according to any one of claims 1 to 8 and at least one secure compartment (11a-11d) to which access is controlled by that system.

12. A vehicle according to claim 11, in which the system is in accordance with claim 4 and the overriding means is operable from within a cabin of the vehicle.

13. A floating vessel comprising a system according to any one of claims 1 to 3 and a valve or lock for controlling discharge of material from the vessel, operation of the valve or lock being controlled by the system in dependence upon the detected location.

## Patentansprüche

1. Sicherheitssystem mit einer Standortbestimmungseinheit (21) und einer physikalischen Verschlußvorrichtung (13a-13d), dadurch gekennzeichnet, daß die physikalische Verschlußvorrichtung eine mechanische Verriegelungs- bzw. Entriegelungsvorrichtung ist, daß das System eine Steuereinrichtung (20), die auf eine Ausgangsgröße von der Standortbestimmungseinheit (21) reagiert, zur Steuerung der Betätigung der Verschlußvorrichtung (13a-13d) in Abhängigkeit von dem Standort, der durch die Standortbestimmungseinrichtung (21) bestimmt worden ist, umfaßt.

2. System nach Anspruch 1, bei dem die Einrichtung einen Standortcodegenerator (23) zur Erzeugung eines Codes, der dem von der Standortbestimmungseinheit bestimmten Standort entspricht, einen Speicher (27) zum Speichern eines oder mehrerer zulässiger Standortcodes, und einen Komparator (25) zum Vergleichen des Standortcodes mit dem zulässigen Code bzw. den zulässigen Codes zur Steuerung der Betätigung der Vorrichtung umfaßt.

3. System nach Anspruch 2, bei dem der Standortcodegenerator (23) dahingehend wirkt, den Standortcode gemäß einem sicheren Algorithmus zu erzeugen.

4. System nach Anspruch 2 oder 3 und umfassend Mittel zum Aufheben der Erfassung eines Standortcodes, der einem zulässigen Code entspricht, um die Betätigung der Vorrichtung zu hemmen.

5. System nach einem der Ansprüche 1 bis 4 und umfassend Mittel zum Signalisieren, daß die Vorrichtung betätigt worden ist.

6. System nach einem der Ansprüche 1 bis 5, bei dem es eine Anzahl solcher Vorrichtungen gibt, die von der Steuereinrichtung (20) gesteuert werden, und die alle jeweils zulässige Standortcodes aufweisen, um den Betrieb dieser Vorrichtung zu ermöglichen.

7. System nach einem der Ansprüche 1 bis 6, bei dem die bzw. jede Vorrichtung eine Sperre ist, die den Zugang zu einem Sicherheitsfach steuert.

8. System nach einem der Ansprüche 1 bis 7, bei dem Einrichtungen vorgesehen sind, um die Vorrichtung über einen vorbestimmten Zeitraum, der auf die Erfassung eines zulässigen Standorts folgt, zu entriegeln, und/oder um die Vorrichtung erneut zu verriegeln, wenn sich der erfaßte Standort ändert.

9. System nach einem der vorhergehenden Ansprüche, bei dem die Steuereinrichtung dahingehend wirkt, den Standortcode mit einem oder mehreren zulässigen, neutralen oder verbotenen Standorten oder Bereichen von Standorten zu vergleichen, und Mitteln zum Signalisieren einer Sicherheitsbedingung gemäß dem Ergebnis dieses Vergleichs.

10. System nach Anspruch 9, bei dem die Signalisiereinrichtung wirksam ist, um eine Abweichung des erfaßten Standorts von einer festgelegten Route zu signalisieren, oder um die Betätigung einer mechanischen Verriegelungs- bzw. Entriegelungsvorrichtung zu steuern, wenn ein zulässiger Standort erfaßt wird.

11. Kraftfahrzeug mit einem System gemäß einem der Ansprüche 1 bis 8 und mit zumindest einem Sicherheitsfach (11a-11d), wobei der Zugriff darauf durch das System geregelt wird.

12. Kraftfahrzeug nach Anspruch 11, bei dem das System gemäß Anspruch 4 vorliegt und die Aufhebungseinrichtung von innerhalb einer Kabine des Fahrzeugs aus betätigt werden kann.

13. Wasserfahrzeug mit einem System gemäß einem der Ansprüche 1 bis 3 und mit einem Ventil oder einer Sperre zum Steuern der Entladung von Material von dem Wasserfahrzeug, wobei die Betätigung des Ventils oder der Sperre von dem System in Abhängigkeit von dem erfaßten Standort gesteuert wird.

## Revendications

1. Système de sécurité comprenant un système de localisation (1) et un moyen de verrouillage physique (13a-13d), caractérisé en ce que, le dispositif de verrouillage physique étant un dispositif de verrouillage ou de déverrouillage physique, le système comporte un moyen de commande (20) réagissant à une sortie du système de localisation (21), pour commander le fonctionnement de ce dispositif de verrouillage (13a-13d) en fonction de l'emplacement déterminé par le système de localisation (21).

2. Système selon la revendication 1, dans lequel le moyen comprend un générateur (23) de code d'emplacement pour produire un code correspondant à l'emplacement déterminé par le système de localisation, une mémoire (27) pour stocker un ou plusieurs codes d'emplacements acceptables et un comparateur (25) pour comparer le code d'emplacement avec le ou les codes acceptables pour commander le fonctionnement du dispositif.

3. Système selon la revendication 2, dans lequel le générateur (23) de code d'emplacement sert à produire le code d'emplacement en fonction d'un algorithme de sûreté.

4. Système selon la revendication 2 ou 3 et comprenant un moyen pour annuler la détection d'un code d'emplacement correspondant à un code acceptable pour interdire le fonctionnement du dispositif.

5. Système selon l'une quelconque des revendications 1 à 4 et comprenant un moyen pour signaler que le dispositif a fonctionné.

6. Système selon l'une quelconque des revendications 1 à 5, dans lequel se trouvent un certain nombres de tels dispositifs commandés par le moyen de commande (20), chacun ayant des codes respectifs d'emplacements acceptables pour permettre le fonctionnement de ce dispositif.

7. Système selon l'une quelconque des revendications 1 à 6 dans lequel le dispositif, ou chaque dispositif, est un verrou commandant l'accès à un compartiment protégé.

8. Système selon l'une quelconque des revendications 1 à 7, dans lequel des moyens sont présents pour déverrouiller le dispositif pendant un laps de temps prédéterminé après la détection d'un emplacement acceptable, et pour reverrouiller le dispositif lorsque l'emplacement détecté change.

9. Système selon l'une quelconque des revendications précédentes, dans lequel le moyen de commande sert à comparer le code d'emplacement avec un ou plusieurs emplacements ou éventails d'emplacements acceptables, neutres ou interdits et un moyen pour signaler un état de sûreté en fonction du résultat de cette comparaison.

10. Système selon la revendication 9, dans lequel le moyen de signalement sert à signaler un écart par rapport de l'emplacement détecté par rapport à un parcours défini ou à commander le fonctionnement d'un dispositif de verrouillage ou de déverrouillage physique si un emplacement acceptable est détecté.

11. Véhicule comportant un système selon l'une quelconque des revendications 1 à 8 et au moins un compartiment protégé (11a-11d) auquel l'accès est commandé par ce système.

12. Véhicule selon la revendication 11, dans lequel le système est conforme à la revendication 4 et le moyen d'annulation peut être actionné depuis l'intérieur d'une cabine du véhicule.

13. Bâtiment flottant comprenant un système selon l'une quelconque des revendications 1 à 3 et un clapet ou un verrou pour commander le déchargement de matière depuis le bâtiment, l'actionnement du clapet ou du verrou étant commandé par le système en fonction de l'emplacement détecté.
